(19)

**Europäisches Patentamt**
**European Patent Office**
**Office européen des brevets**

(11) **EP 3 995 888 B1**

(12) **EUROPEAN PATENT SPECIFICATION**

(45) Date of publication and mention
of the grant of the patent:
**23.07.2025  Bulletin 2025/30**

(21) Application number: **20837915.6**

(22) Date of filing: **02.06.2020**

(51) International Patent Classification (IPC):
*G03B 37/06* (2021.01)    *G03B 35/10* (2021.01)
*G03B 17/17* (2021.01)    *G03B 29/00* (2021.01)
*H04N 23/55* (2023.01)    *B60R 1/24* (2022.01)
*B60R 1/31* (2022.01)

(52) Cooperative Patent Classification (CPC):
**G03B 35/10; B60R 1/24; B60R 1/31; G03B 17/17;**
**G03B 29/00; G03B 37/06;** B60R 2300/107;
H04N 23/55

(86) International application number:
**PCT/JP2020/021765**

(87) International publication number:
**WO 2021/005921 (14.01.2021 Gazette 2021/02)**

(54) **STEREO CAMERA AND LIGHT UNIT WITH INTEGRATED STEREO CAMERA**

STEREOKAMERA UND LICHTEINHEIT MIT INTEGRIERTER STEREOKAMERA

CAMÉRA STÉRÉO ET UNITÉ DE LUMIÈRE DOTÉE D'UNE CAMÉRA STÉRÉO INTÉGRÉE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **05.07.2019  JP 2019125737**

(43) Date of publication of application:
**11.05.2022  Bulletin 2022/19**

(73) Proprietor: **Hitachi Astemo, Ltd.**
**Ibaraki 312-8503 (JP)**

(72) Inventors:
• **SHIMANO Takeshi**
**Tokyo 100-8280 (JP)**

• **BETSUI Keiichi**
**Tokyo 100-8280 (JP)**
• **MONJI Tatsuhiko**
**Hitachinaka-shi, Ibaraki 312-8503 (JP)**

(74) Representative: **Mewburn Ellis LLP**
**Aurora Building**
**Counterslip**
**Bristol BS1 6BX (GB)**

(56) References cited:
**CN-A- 102 053 475      JP-A- 2002 185 957**
**JP-A- 2006 330 735      JP-A- 2008 243 515**
**JP-A- 2013 006 564      US-A1- 2004 027 689**
**US-A1- 2006 268 103      US-A1- 2014 293 055**

EP 3 995 888 B1

## Description

Technical Field

The present invention relates to a stereo camera and a light unit with integrated stereo camera.

Background Art

Development and improvement of automatic driving, automatic braking, automatic following, and the like in automobiles have been rapidly advanced. In order to realize fully automatic driving, it is necessary to accurately recognize an object moving at a high speed and measure a distance to the object in a wide range around the vehicle.

For example, in a case where an object (for example, a motorcycle) moving at 70 km/h is recognized by a sensor at a front end of the vehicle, it is assumed that imaging with an angular resolution of 0.06°/pixel and a distance measurement system of 10% at a distance of 100m are necessary. Regarding such a requirement, existing laser imaging detection and ranging (LiDAR) and millimeter wave radars have a problem in that it is necessary to use a camera together for accurate recognition of the surroundings. In addition, in a case of a scanning type detection device, since a movable portion is required, there is a problem in that it is expensive and the response speed is not sufficient.

In addition, a stereo camera capable of three-dimensionally grasping the position of an object is also used for automatic driving control and the like. However, in a case of a stereo camera in the related art, it is usually necessary to mount two image sensors apart from each other by an interval corresponding to parallax, which causes an increase in cost and an increase in size. Further, since the size is large, it is difficult to arrange it at the left and right front ends of the automobile, and also difficult to perform wide-angle sensing.

As described above, in a case where a stereo camera is mounted on an automated driving vehicle, a compact stereo camera capable of performing high-accuracy and wide-angle sensing has been required.

JP 4388530 describes an apparatus for providing panoramic stereo image with single camera. CN 102 053 475 A refers to a single camera based omnibearing stereo vision system. US 2004/ 027689 A1 discloses a wide-angle imaging device suitable for a monitor area of about 180 degrees. US 2014/293055 A1 refers to an image processing apparatus that detects an object from images taken by an imaging element mounted on a moving body.

Summary of Invention

Technical Problem

An object of the present invention is to provide a compact stereo camera and a light unit with integrated stereo camera capable of performing high-accuracy and wide-angle sensing.

Solution to Problem

In order to solve the above problem, the subject matter of the independent claims is provided. The dependent claims describe optional embodiments of the invention.

Advantageous Effects of Invention

According to the present invention, it is possible to provide a compact stereo camera and a headlight unit with integrated stereo camera capable of performing high-accuracy and wide-angle sensing.

Brief Description of Drawings

[FIG. 1] FIG. 1 is a schematic perspective view illustrating an overall structure of a stereo camera 101 according to a first embodiment.
[FIG. 2] FIG. 2 is a schematic view illustrating structures and operations of an upper hyperboloid mirror 102 and a lower hyperboloid mirror 103 (inner hyperboloid mirror 103A and outer hyperboloid mirror 103B) in more detail.
[FIG. 3] FIG. 3 is a schematic view illustrating a positional relationship between an imaging optical system 104 and an image sensor 105.
[FIG. 4] FIG. 4 is an example (comparative example) of an image based on a first light R1 and a second light R2 on a light-receiving surface Pi of the image sensor 105 in a case where a center position CP1 substantially coincides with an optical axis Ox2.

[FIG. 5] FIG. 5 is an example of an image based on the first light R1 and the second light R2 on the light-receiving surface Pi of the image sensor 105 in a case where the center position CP1 is shifted from the optical axis Ox2.

[FIG. 6] FIG. 6 illustrates an example of an aspect ratio of a light-receiving surface of the image sensor 105, an internal angle θ (θ1, θ2) of the upper hyperboloid mirror 102 and the lower hyperboloid mirror 103, an angle α (hereinafter, referred to as "axial inclination α") between a center line of an image on the fan-shaped image sensor 105 and a vertical side (short side) of the light-receiving surface of the image sensor 105, and a light receiving state of the light-receiving surface Pi of the image sensor 105.

[FIG. 7] FIG. 7 illustrates an example of an aspect ratio of a light-receiving surface of the image sensor 105, an internal angle θ (θ1, θ2) of the upper hyperboloid mirror 102 and the lower hyperboloid mirror 103, an angle α (hereinafter, referred to as "axial inclination α") between a center line of an image on the fan-shaped image sensor 105 and a vertical side (short side) of the light-receiving surface of the image sensor 105, and a light receiving state of the light-receiving surface Pi of the image sensor 105.

[FIG. 8] FIG. 8 is a graph illustrating a combination of an internal angle θ and an axial inclination α with which the resolution in the image sensor 105 can be maximized for each aspect ratio AP of the image sensor 105.

[FIG. 9] FIG. 9 is a schematic view illustrating an effect that the inner hyperboloid mirror 103A and the outer hyperboloid mirror 103B have a step at a boundary therebetween.

[FIG. 10] FIG. 10 is a schematic perspective view illustrating an overall structure of a stereo camera 101 according to a second embodiment.

[FIG. 11] FIG. 11 is a schematic perspective view illustrating a structure of a headlight set 800 according to a third embodiment.

Description of Embodiments

Hereinafter, the present embodiment will be described with reference to the accompanying drawings. In the accompanying drawings, functionally same elements may be denoted by the same numbers. Note that, although the accompanying drawings illustrate embodiments and implementation examples conforming to the principles of the present disclosure, these are for understanding the present disclosure and are not used to interpret the present disclosure in a limited manner. The description herein is exemplary only and is not intended to limit the claims or applications of the disclosure in any way.

In the present embodiment, the description has been made in sufficient detail for those skilled in the art to implement the present disclosure; however, it is necessary to understand that other implementations and embodiments are possible, and changes in configurations and structures and replacement of various elements are possible

[First embodiment]

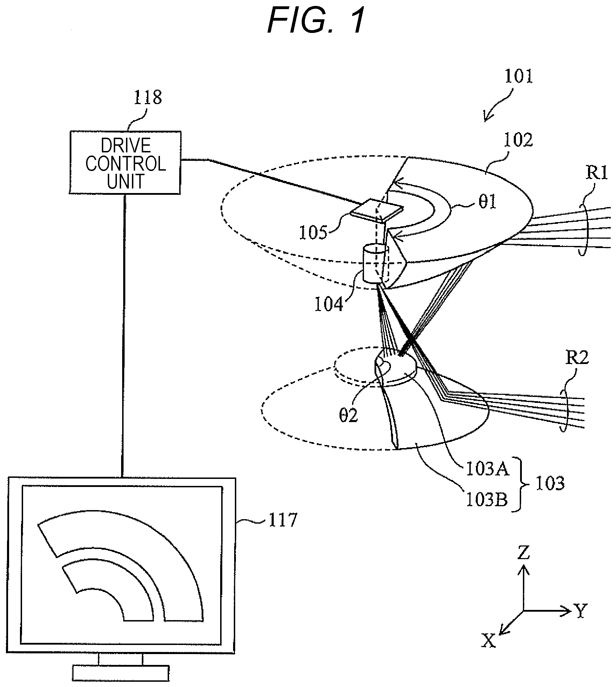

With reference to a schematic perspective view of FIG. 1, a stereo camera 101 according to a first embodiment will be described with reference to FIG. 1. As an example, the stereo camera 101 includes an upper hyperboloid mirror 102, a lower hyperboloid mirror 103, an imaging optical system 104, an image sensor 105, a display 117, and a drive control unit 118. One imaging optical system 104 and one image sensor 105 may be provided for each of a pair of the hyperboloid mirrors (upper hyperboloid mirror 102 and lower hyperboloid mirror 103). Since the information on the position of the subject in a three-dimensional space can be grasped by the single image sensor 105, the cost can be reduced as compared with the stereo camera in the related art.

The upper hyperboloid mirror 102 (first mirror) and the lower hyperboloid mirror 103 (second mirror) integrally constitute a hyperboloid mirror. The upper hyperboloid mirror 102 has a reflective surface (first reflective surface) along an upper hyperboloid convex in a downward direction (negative direction of the Z-axis (first direction)), while the lower hyperboloid mirror has a reflective surface (second reflective surface) along a lower hyperboloid convex in an upward direction (positive direction of the Z-axis (second direction)). In other words, the upper hyperboloid mirror 102 and the lower hyperboloid mirror 103 are arranged such that the vertex of the upper hyperboloid mirror 102 and the vertex of the lower hyperboloid mirror 103 face each other and the central axis Ox coincides with each other. Note that a Z direction in FIG. 1 is typically preferably a direction substantially coinciding with the gravity direction in a case where the stereo camera 101 is mounted on an automobile, but is not limited thereto. In the example of FIG. 1, the upper hyperboloid mirror 102 is disposed on the upper side and the lower hyperboloid mirror 103 is disposed on the lower side, but the vertical positional relationship can be reversed.

The lower hyperboloid mirror 103 is further divided into an inner hyperboloid mirror 103A (inner mirror) and an outer hyperboloid mirror 103B (outer mirror). The inner hyperboloid mirror 103A is disposed at a position including the vertex of the hyperboloid, and the outer hyperboloid mirror 103B is disposed on the outer peripheral side of the outer edge of the inner hyperboloid mirror 103. The inner hyperboloid mirror 103 and the outer hyperboloid mirror 103B have a common central axis Ox. The inner hyperboloid mirror 103A and the outer hyperboloid mirror 103B have different conic constants. Further, both have a step at the boundary, and the inner hyperboloid mirror 103A protrudes upward from the outer hyperboloid mirror 103B.

The upper hyperboloid mirror 102 does not have a reflective surface over the entire circumference (360°) of the hyperboloid surface, and is cut out in a fan shape (first fan shape) having an internal angle $\theta1$ of 90° or more and 180° or less. Similarly, the lower hyperboloid mirror 103 does not have a reflective surface over the entire circumference (360°) of the hyperboloid surface, and is cut out in a fan shape (second fan shape) having an internal angle $\theta2$ of 90° or more and 180° or less. The internal angles $\theta1$ and $\theta2$ are set to angles corresponding to a horizontal view angle of the stereo camera 101.

Since the upper hyperboloid mirror 102 and the lower hyperboloid mirror 103 have such fan shapes, the resolution of the image sensor 105 can be improved, and as a result, the accuracy of the distance measurement of the stereo camera can be improved. This point will be described later. The fan shape described herein is not limited to a shape obtained by linearly cutting out a part of a circle along a radius thereof. For example, as illustrated in FIG. 1, a shape in which a reflective surface in the vicinity of the vertex is cut out is also included in the fan shape described herein. In the following description, it is assumed that the internal angles $\theta1$ and $\theta2$ have the same value, but the internal angles $\theta1$ and $\theta2$ may have different values.

The stereo camera 101 reflects a plurality of light fluxes having different paths from the subject on a hyperboloid mirror (the upper hyperboloid mirror 102 and the lower hyperboloid mirror 103) in a range of a predetermined horizontal angle of view, thereby making it possible to acquire information on the distance to the subject. Specifically, the first light R1 from the subject is reflected by the upper hyperboloid mirror 102, then further reflected on the lower hyperboloid mirror 103 (the inner hyperboloid mirror 103A), and then incident on the image sensor 105 via the imaging optical system 104. In addition, the second light R2 different from the first light R1 from the subject is reflected on the lower hyperboloid mirror 103 (the outer hyperboloid mirror 103B) and is incident on the image sensor 105 via the imaging optical system 104. In this manner, the first light R1 and the second light R2, which pass through different optical paths from the subject and reach the hyperboloid mirror, are incident on different portions on the image sensor 105 from different directions, and thereby the three-dimensional position and distance of the subject can be calculated.

The imaging optical system 104 is configured to include a combination of one or more lenses, and can be preferably disposed on a straight line connecting the vertexes of the upper hyperboloid mirror 102 and the lower hyperboloid mirror 103.

The image sensor 105 includes, for example, a complementary metal oxide semiconductor (CMOS) sensor or a charge coupled device (CCD) sensor, and is configured to generate an image signal based on light received via the imaging optical system 104 and output the image signal to the drive control unit 118 under the control of the drive control unit 118.

The drive control unit 118 supplies the image signal output from the image sensor 105 to the display 117. The display 117 generates three-dimensional position information of a subject 109 based on the supplied output image. Specifically, the drive control unit 118 calculates the three-dimensional position or distance of the subject by analyzing the image signal based on the first light R1 and the second light R2. Note that the image itself received by the image sensor 105 may be displayed on the display 117, or a three-dimensional image of the subject as a result of performing predetermined image processing may be displayed. The three-dimensional image information may be displayed on the display 117, may be supplied to an electronic control unit (ECU) of an automobile on which the stereo camera 101 is mounted, or may be transmitted to an external server via a communication control unit (not illustrated).

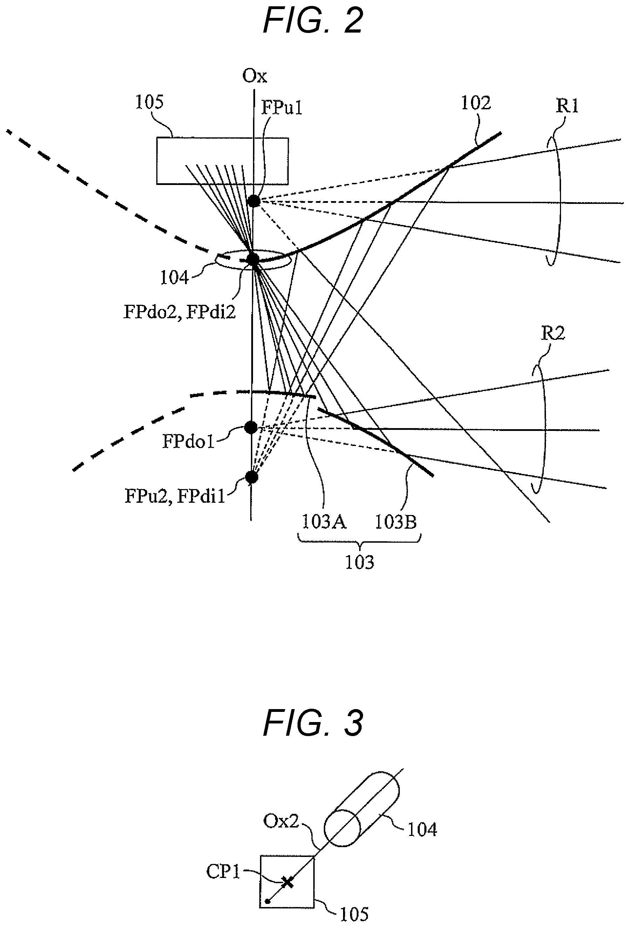

Next, the upper hyperboloid mirror 102 and the lower hyperboloid mirror 103 (inner hyperboloid mirror 103A and outer hyperboloid mirror 103B) will be described in more detail with reference to FIG. 2.

The hyperboloid of each of the upper hyperboloid mirror 102, the inner hyperboloid mirror 103A, and the outer hyperboloid mirror 103B can be defined by a quadratic surface expressed by the following [Mathematical Formula 1]. When the conic constant $\kappa$ is smaller than -1, the quadratic surface becomes a hyperboloid. The absolute value of the conic constant $\kappa$ of the inner hyperboloid mirror 103A is set to a value larger than the absolute value of the conic constant $\kappa$ of the outer hyperboloid mirror 103B.

[Mathematical Formula 1]

$$z(r) = \frac{cr^2}{1 + \sqrt{1 - (1 + \kappa)c^2 r^2}}$$

Here, z(r) in [Mathematical Formula 1] is the sag amount of the surface in the optical axis direction with the vertex on the optical axis as an origin. c represents curvature on the optical axis (on-axis curvature), and r represents a radial coordinate from the optical axis.

In general, a hyperboloid has two focal points, and the coordinates thereof are expressed by the following equation [Mathematical Formula 2] with respect to a surface vertex.

[Mathematical Formula 2]

$$f = \frac{1}{c\left(1 \pm \sqrt{-\kappa}\right)}$$

Note that the coordinates of the focal point on the inner side of the hyperboloid are represented by f when $\pm$ of [Mathematical Formula 2] is +. Furthermore, in [Mathematical Formula 2], the coordinates of the focal point on the outer side of the hyperboloid are represented by f in a case where $\pm$ is -. Hereinafter, a focal point on the inner side of the hyperboloid is referred to as a "first focal point", and a focal point on the outer side of the hyperboloid is referred to as a "second focal point".

The upper hyperboloid mirror 102 and the inner hyperboloid mirror 103A are arranged such that a second focal point FPu2 of the upper hyperboloid mirror 102 substantially coincides with a first focal point FPdi1 of the inner hyperboloid mirror 103A. Note that a first focal point FPdo1 of the outer hyperboloid mirror 103B does not need to substantially coincide with the second focal point FPu2 and the first focal point FPdi1, but the outer hyperboloid mirror 103B is preferably disposed so as to be in the vicinity thereof.

The inner hyperboloid mirror 103A and the outer hyperboloid mirror 103B are arranged such that a second focal point FPdo2 of the outer hyperboloid mirror 103B substantially coincides with a second focal point FPdi2 of the inner hyperboloid mirror 103A. The imaging optical system 104 is disposed at the positions of the second focal point FPdo2 and the second focal point FPdi2. Note that a first focal point FPu1 of the upper hyperboloid mirror 102 may substantially coincide with the positions of the second focal point FPdo2 and the second focal point FPdi2, but is preferably located in the vicinity thereof, specifically, above the positions of the second focal point FPdo2 and the second focal point FPdi2.

Since the upper hyperboloid mirror 102 and the lower hyperboloid mirror 103 have the above positional relationship, the first light R1 directed from the subject to the first focal point FPu1 is reflected by the upper hyperboloid mirror 102 and then directed to the second focal point FPu2. Since the second focal point FPu2 and the first focal point FPdi1 substantially coincide with each other, the light reflected by the inner hyperboloid mirror 103A is condensed toward the second focal point FPdi2 (second focal point FPdo2). This light is incident on the image sensor 105 via the imaging optical system 104.

The second light R2 directed from the subject to the first focal point FPdo1 is reflected by the outer hyperboloid mirror 103B and then directed to the second focal point FPdo2 (second focal point FPdi2). The second light R2 is incident on the imaging optical system 104 at an incident angle different from that of the first light R1, and thereby the second light is incident on a light-receiving surface of the image sensor 105 at a position different from that of the first light R1.

As described above, the image sensor 105 captures the image of the subject viewed from the first focal point FPdo1 based on the first light R1, and projects the image of the subject viewed from the first focal point FPdo1 based on the second light R2, and these images are used as output images. As described above, the absolute value of the conic constant $\kappa$ of the inner hyperboloid mirror 103A is set to a value larger than the absolute value of the conic constant $\kappa$ of the

outer hyperboloid mirror 103B. As a result, in the output image of the image sensor 105, the sizes of the image of the subject viewed from the first focal point (upper viewpoint) FPu1 and the image of the subject viewed from the first focal point FPdo1 are aligned. Since the sizes of the images are aligned, the resolutions of both images can be matched, and the accuracy of the parallax matching processing can be improved.

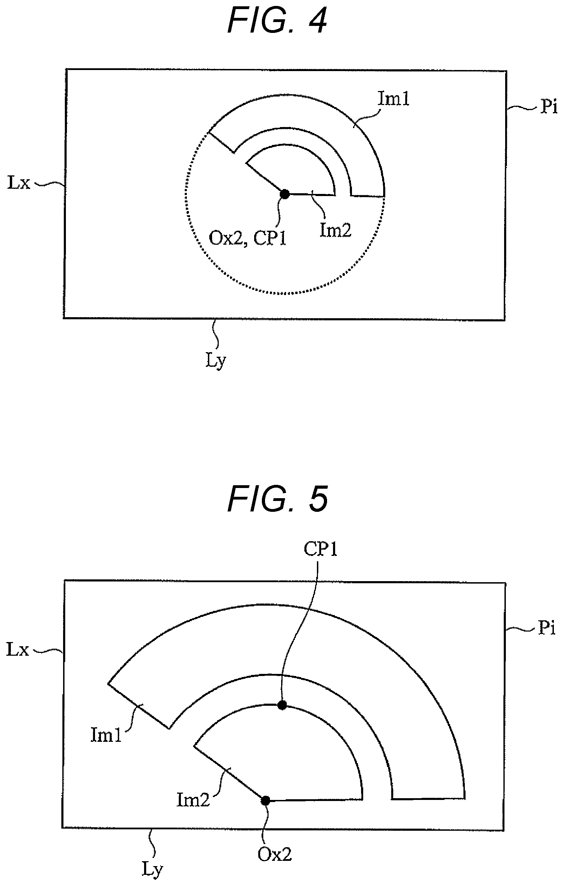

Next, a positional relationship between the imaging optical system 104 and the image sensor 105 will be described with reference to FIG. 3. The optical axis Ox2 of the imaging optical system 104 is disposed so as to coincide with the central axes Ox of the upper hyperboloid mirror 102 and the lower hyperboloid mirror 103. On the other hand, the center position CP1 of the light-receiving surface Pi of the image sensor 105 is shifted from the optical axis Ox2. As a result, the light (fan-shaped image) reflected from the fan-shaped upper hyperboloid mirror 102 and the lower hyperboloid mirror 103 can be received by the wider light-receiving surface of the image sensor 105, and as a result, the resolution of the stereo camera 101 can be improved. This will be described with reference to FIGS. 4 and 5.

FIG. 4 is an example of an image based on the first light R1 and the second light R2 formed on the light-receiving surface Pi of the image sensor 105 in a case where the center position CP1 substantially coincides with the optical axis Ox2. In this case, both a fan-shaped image Im1 based on the first light R1 and a fan-shaped image Im2 based on the second light R2 are formed mainly on one side (upper side in FIG. 4) of the center position CP1 and are not formed on the other side. For this reason, the number of pixels contributing to the analysis of the images Im1 and Im2 decreases, and a sufficient resolution cannot be obtained.

On the other hand, FIG. 5 is an example of an image based on the first light R1 and the second light R2 formed on the light-receiving surface Pi of the image sensor 105 in a case where the center position CP1 is shifted from the optical axis Ox2. Unlike the case of FIG. 4, the fan-shaped images Im1 and Im2 can be received by the wide light-receiving surface of the image sensor 105 on both sides rather than one side of the center position CP1. By appropriately setting the magnification of the imaging optical system 104 and a shift amount (FIG. 3) of the image sensor 105, the images Im1 and Im2 can be maximized on the light-receiving surface of the image sensor 105, and thereby the resolution of the stereo camera 101 can be improved.

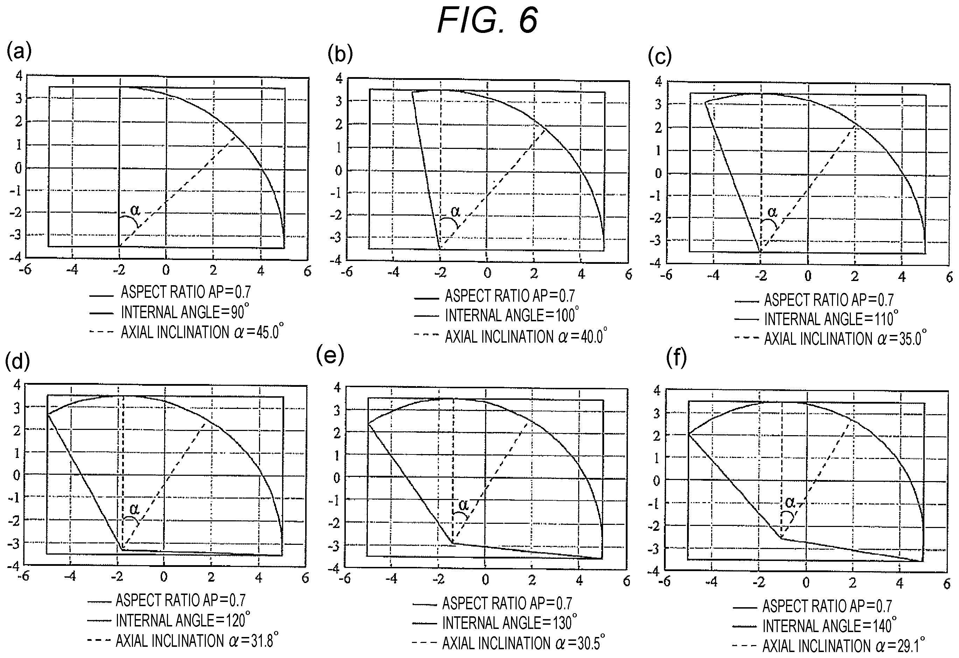

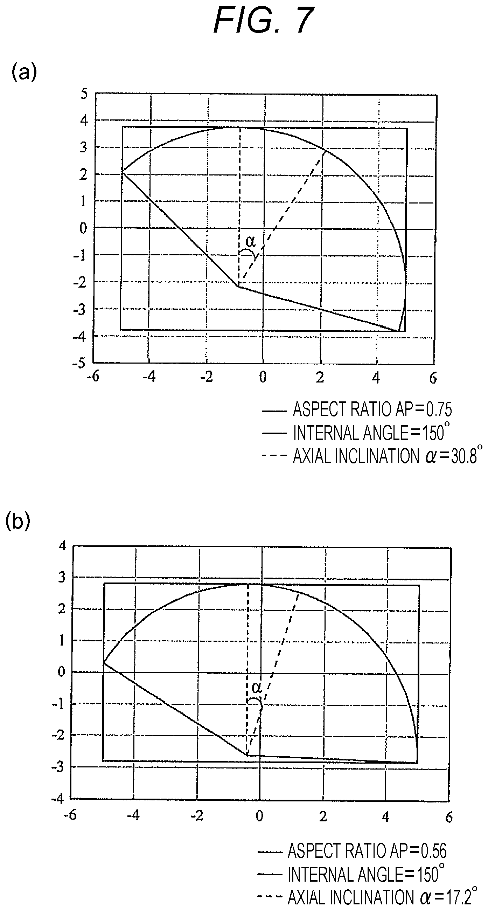

FIGS. 6 and 7 illustrate an example of a relationship of between an aspect ratio AP of a light-receiving surface Pi of the image sensor 105, an internal angle $\theta$ ($\theta1$, $\theta2$) of the upper hyperboloid mirror 102 and the lower hyperboloid mirror 103, an angle $\alpha$ (hereinafter, referred to as "axial inclination $\alpha$") between a center line of the fan-shaped images Im1 and Im2 on the image sensor 105 and a short side Lx of the light-receiving surface of the image sensor 105, and a light receiving state of the light-receiving surface Pi of the image sensor 105. Here, the internal angle $\theta1 = \theta2$ is assumed.

FIG. 6(a) illustrates an example of a simulation result of the light receiving state of the image sensor 105 in a case where the aspect ratio AP is set to 0.7, the internal angle $\theta$ is set to 90°, the axial inclination $\alpha$ is set to 45.0°, and the magnification of the imaging optical system 104 is set to the maximum. FIGS. 6(b) to 6(f) also illustrate examples of simulation results of the light receiving state of the image sensor 105 in a case where the numerical values illustrated in FIG. 6 are set. FIG. 7 illustrates an example in a case where the aspect ratio AP is set to 0.75 (4:3) and 0.56 (16:9).

As is clear from FIGS. 6 and 7, the resolution of the stereo camera 101 can be further improved by setting the optimum axial inclination $\alpha$ according to the given aspect ratio AP and internal angle $\theta$. The image sensor 105 and the imaging optical system 104 are disposed such that center lines of the fan-shaped images Im1 and Im2 projected onto light-receiving surface Pi of the image sensor 105 are non-parallel to the short side Lx of the light-receiving surface Pi of the image sensor 105. As a result of simulations by the applicant including FIGS. 6 and 7, it has been found that when the aspect ratio AP is 0.75, the axial inclination $\alpha$ is preferably 25° or more if the internal angle $\theta$ is 180° or less. In addition, it has been found that when the aspect ratio AP is 0.56 (16:9), the axial inclination $\alpha$ is preferably 7° or more if the internal angle $\theta$ is 180° or less.

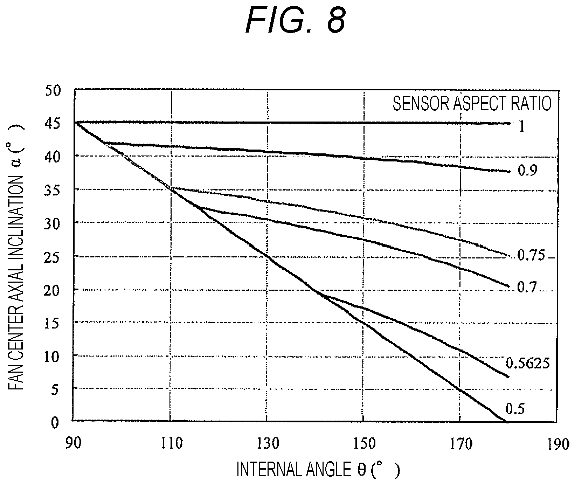

FIG. 8 is a graph illustrating a combination of an internal angle $\theta$ and an axial inclination $\alpha$ with which the resolution in the image sensor 105 can be maximized for each aspect ratio AP of the image sensor 105. As illustrated in FIG. 8, when the aspect ratio AP is 1, regardless of the magnitude of the internal angle $\theta$, the axial inclination $\alpha$ is optimally 45 degrees. However, in a case where the aspect ratio AP is less than 1, it is preferable that the larger the internal angle $\theta$, the smaller the axial inclination $\alpha$.

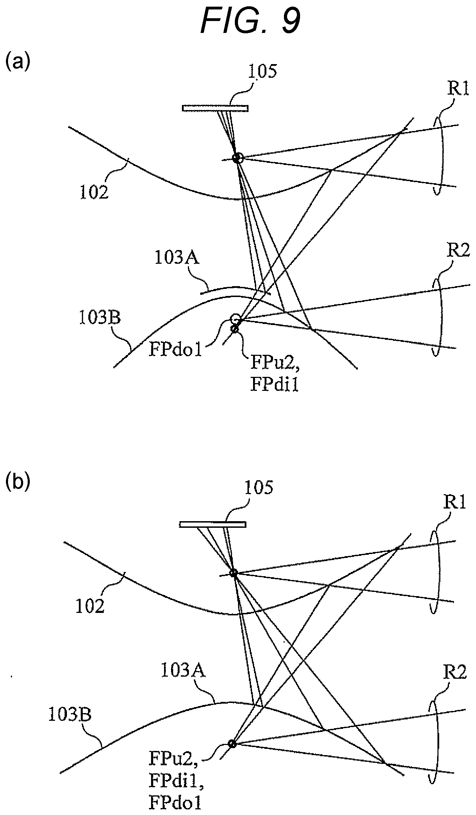

As described above, it is preferable that the inner hyperboloid mirror 103A and the outer hyperboloid mirror 103B have a step at the boundary, and the inner hyperboloid mirror 103A protrudes upward as compared with the outer hyperboloid mirror 103B. FIG. 9(a) illustrates an example of the light receiving state of the first light R1 and the second light R2 when the inner hyperboloid mirror 103A protrudes upward as compared with the outer hyperboloid mirror 103B as in the present embodiment. On the other hand, FIG. 9 (b) illustrates an example of the light receiving state of the first light R1 and the second light R2 when there is no step between the inner hyperboloid mirror 103A and the outer hyperboloid mirror 103B unlike the present embodiment.

In the case of FIG. 9(b), the distance between the first focal point FPu1 and the first focal point FPdo1 is large. With this, in the image sensor 105, the distance between the light receiving positions of the first light R1 and the second light R2 is also large, and the angle of view that can be stereoscopically viewed is small. In this regard, in the first embodiment (FIG. 9(a)), the distance between the light receiving positions of the first light R1 and the second light R2 can be reduced, and the angle of view that can be stereoscopically viewed can be increased. Alternatively, the resolution of the image sensor 105 can be improved, and the detection accuracy of the distance to the subject can be improved.

In the first embodiment described above, hyperboloid mirrors arranged to face each other are used as a pair of mirrors that reflects light from the subject. However, the pair of mirrors is not limited to the hyperboloid mirrors as illustrated in the drawing, and a spherical mirror, a paraboloid mirror, an elliptical mirror, an aspherical mirror, or the like arranged opposite to each other can be adopted instead of the hyperboloid mirrors.

As described above, in the stereo camera 101 of the first embodiment, the upper hyperboloid mirror 102 and the lower hyperboloid mirror 103 constituting the hyperboloid mirror are formed in a fan shape having the internal angle θ of 180° or less. Furthermore, the center position of the image sensor 105 is set to a position shifted with respect to the optical axis of the imaging optical system so that the image from the fan-shaped hyperboloid mirror can be received to the maximum. With this, it is possible to provide a compact stereo camera capable of performing high-accuracy and wide-angle sensing.

[Second embodiment]

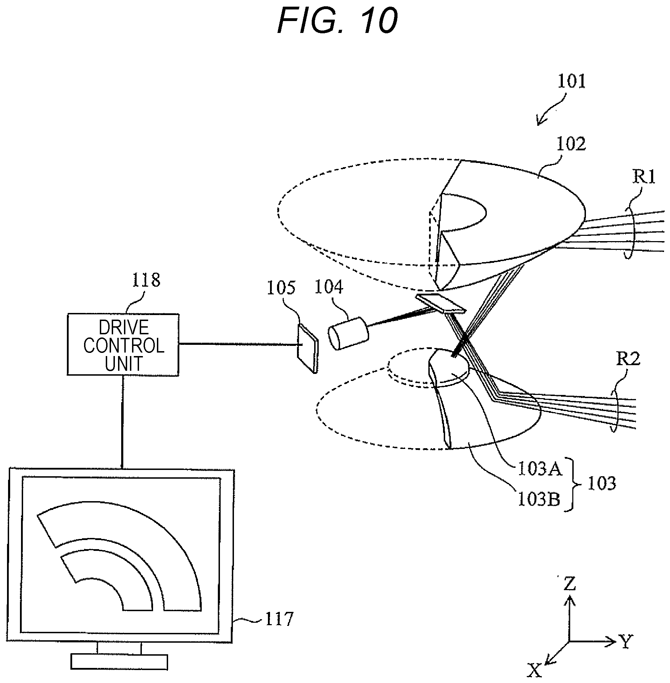

Next, a stereo camera 101 according to a second embodiment will be described with reference to FIG. 10. In FIG. 10, the same components as those in FIG. 1 are denoted by the same reference numerals as those in FIG. 1, and thus redundant description will be omitted.

In the second embodiment, a reflection mirror 106 is provided between the imaging optical system 104 and the lower hyperboloid mirror 103. Furthermore, the arrangement position of the imaging optical system 104 is also the reflection direction of the reflection mirror 106, which is different from the first embodiment in which the imaging optical system 104 is disposed in the vicinity of the vertex of the hyperboloid of the upper hyperboloid mirror.

According to this configuration, since the incident light to the imaging optical system 104 can be folded back by the reflection mirror 106, the imaging optical system 104 and the image sensor 105 can be housed within the range of the height of the hyperboloid mirrors (the upper hyperboloid mirror 102 and the lower hyperboloid mirror 103), so that the size of the stereo camera 101 can be reduced.

[Third embodiment]

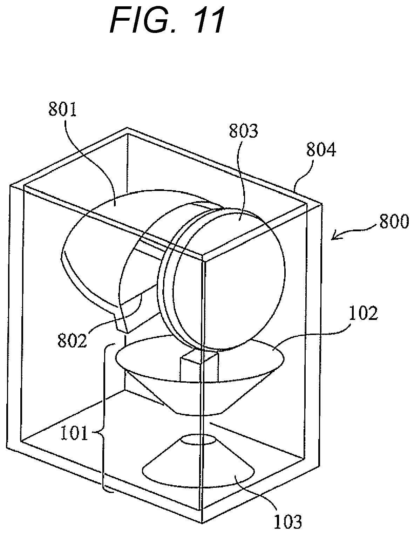

Next, a stereo camera-integrated headlight unit according to a third embodiment will be described with reference to FIG. 11. FIG. 11 is a perspective view illustrating a configuration example of a stereo camera-integrated headlight unit 800 according to the third embodiment.

The stereo camera-integrated headlight unit 800 is obtained by integrating a stereo camera 101 similar to that of the above-described embodiment into a housing 804 of a headlight of an automobile. The stereo camera-integrated headlight unit 800 may incorporate a turn lamp, a positioning lamp, or the like.

Note that a configuration example of the stereo camera-integrated headlight unit 800 illustrated in FIG. 11 is assumed to be attached to left and right front ends of an automobile. On the left and right rear ends of the automobile, a tail lamp unit and a stop lamp unit similar to those in FIG. 11 can be provided.

The stereo camera-integrated headlight unit 800 includes, as an example, an LED light source (not illustrated), a reflector 801 that reflects and focuses white light emitted from the LED light source toward the front of the automobile, a shade 802 that blocks the emitted light in order to form a cut-off line of a low beam, and a headlight structure (light irradiation unit) including a lens 803 that forms an image of an edge blocked by the shade 802 at a distance. Note that, in a case of emitting a high beam, for example, the shade 802 can be made movable and shifted from the optical path.

According to the stereo camera-integrated headlight unit 800 in which the stereo camera 101 and the headlight are integrated, an installation area can be reduced as compared with a case where the stereo camera 101 is disposed at the left and right front ends of the automobile separately from the headlight. Furthermore, handling is facilitated, and assembly and positioning with respect to the vehicle body can be easily performed. Furthermore, in the configuration example of FIG. 11, in the headlight unit 800, the stereo camera 101 is disposed below the headlight structure (801 to 803). According to this disposition, since the stereo camera 101 can be disposed without blocking the light emitted from the headlight structure, so-called nose view can be easily realized in the automated driving vehicle.

Examples of the above-described embodiments have been described in detail in order to describe the present invention in an easy-to-understand manner, and are not necessarily limited to those having all the described configurations.

Reference Signs List

101     stereo camera
102     upper hyperboloid mirror
103     lower hyperboloid mirror
103A    inner hyperboloid mirror
104     imaging optical system
105     image sensor
117     display
118     drive control unit

**Claims**

1. A stereo camera comprising:

   a first mirror (102) that has a first reflective surface which is a curved surface convex in a first direction, has a first vertex, and has a first fan shape;
   a second mirror (103) that has a second reflective surface convex in a second direction opposite to the first direction, has a second vertex facing the first vertex, and has a second fan shape;
   an imaging optical system (104) that forms an image of first light (R1) emitted from a subject, reflected on the first reflective surface, and then further reflected on the second reflective surface, and second light (R2) emitted from the subject and reflected on the second reflective surface; and
   an image sensor (105) that receives the first light (R1) and the second light (R2) via the imaging optical system (104),
   wherein
   the second mirror (103) includes an inner mirror (103A) and an outer mirror (103B) located on an outer peripheral side of the inner mirror (103A),
   the first mirror (102) is a hyperboloid mirror,
   the inner mirror (103A) is a hyperboloid mirror,
   the outer mirror (103B) is a hyperboloid mirror, the outer mirror (103B) has a conic constant different from a conic constant of the inner mirror (103A),
   the image sensor (105) is disposed at a position where a center position of the image sensor (105) is shifted from an optical axis of the imaging optical system (104), and
   the image sensor (105) and the imaging optical system (104) are disposed such that a center line of a fan-shaped image projected on a light-receiving surface (Pi) of the image sensor (105) is non-parallel to a short side of the light-receiving surface (Pi) of the image sensor (105).

2. The stereo camera according to claim 1, wherein

   the first light (R1) is light that is directed to an inner focal point of the first mirror (102) and is reflected on the first reflective surface, and further that is directed to an inner focal point of the inner mirror (103A) and is reflected on the second reflective surface, and
   the second light (R2) is light that is directed to an inner focal point of the outer mirror (103B) and is reflected on the second reflective surface.

3. The stereo camera according to claim 1, wherein the first mirror (102) and the second mirror (103) are disposed such that an outer focal point of the first mirror (102) substantially coincides with the inner focal point of the inner mirror (103A).

4. The stereo camera according to claim 3, wherein the inner mirror (103A) and the outer mirror (103B) are disposed such that an outer focal point of the inner mirror (103A) substantially coincides with an outer focal point of the outer mirror (103B).

5. The stereo camera according to claim 1, further comprising:
   a mirror disposed to reflect the first light (R1) or the second light (R2) toward the imaging optical system (104).

6. The stereo camera according to claim 1, wherein the outer mirror (103B) has a step with an outer periphery of the inner mirror (103A).

7. A light unit with integrated stereo camera, comprising:

a stereo camera according to claim 1; and
a light irradiation unit that emits light emitted from a light source.

8. The light unit with integrated stereo camera according to claim **7,** wherein the stereo camera is disposed below the light irradiation unit.

9. The light unit with integrated stereo camera according to claim **7,** wherein

the first light (R1) is light that is directed to an inner focal point of the first mirror (102) and is reflected on the first reflective surface, and further that is directed to an inner focal point of the inner mirror (103A) and is reflected on the second reflective surface, and
the second light (R2) is light that is directed to an inner focal point of the outer mirror (103B) and is reflected on the second reflective surface.

10. The light unit with integrated stereo camera according to claim 7, wherein the first mirror (102) and the second mirror (103) are disposed such that an outer focal point of the first mirror (102) substantially coincides with the inner focal point of the inner mirror (103A).

11. The light unit with integrated stereo camera according to claim 10, wherein the inner mirror (103A) and the outer mirror (103B) are arranged such that an outer focal point of the inner mirror (103A) substantially coincides with an outer focal point of the outer mirror (103B).

**Patentansprüche**

1. Stereokamera, die Folgendes umfasst:

einen ersten Spiegel (102), der eine erste reflektierende Oberfläche aufweist, bei der es sich um eine gekrümmte Oberfläche handelt, die in eine erste Richtung konvex ist, einen ersten Scheitelpunkt aufweist und eine erste Fächerform aufweist;
einen zweiten Spiegel (103), der eine zweite reflektierende Oberfläche aufweist, die in eine zweite Richtung konvex ist, die der ersten Richtung entgegengesetzt ist, einen zweiten Scheitelpunkt aufweist, der dem ersten Scheitelpunkt zugewandt ist, und eine zweite Fächerform aufweist;
ein optisches Bildgebungssystem (104), das ein Bild eines ersten Lichts (R1), das von einem Objekt ausgesendet, an der ersten reflektierenden Oberfläche reflektiert und dann an der zweiten reflektierenden Oberfläche weiter reflektiert wird, und eines zweiten Lichts (R2), das vom Objekt ausgesendet und an der zweiten reflektierenden Oberfläche reflektiert wird, erstellt; und
einen Bildsensor (105), der das erste Licht (R1) und das zweite Licht (R2) über das optische Bildgebungssystem (104) empfängt,
wobei
der zweite Spiegel (103) einen Innenspiegel (103A) und einen Außenspiegel (103B), der an einer äußeren Umfangsseite des Innenspiegels (103A) angeordnet, umfasst,
der erste Spiegel (102) ein hyperbolischer Spiegel ist,
der Innenspiegel (103A) ein hyperbolischer Spiegel ist,
der Außenspiegel (103B) ein hyperbolischer Spiegel ist,
der Außenspiegel (103B) eine andere konische Konstante aufweist als die konische Konstante des Innenspiegels (103A),
der Bildsensor (105) an einer Position angeordnet ist, an der die Mittelposition des Bildsensors (105) gegenüber der optischen Achse des optischen Bildgebungssystems (104) versetzt ist, und
der Bildsensor (105) und das optische Bildgebungssystem (104) so angeordnet sind, dass die Mittellinie eines fächerförmigen Bildes, das auf eine Licht empfangende Oberfläche (Pi) des Bildsensors (105) projiziert wird, zur kurzen Seite der Licht empfangenden Oberfläche (Pi) des Bildsensors (105) nicht parallel ist.

2. Stereokamera nach Anspruch 1, wobei

das erste Licht (R1) Licht ist, das auf den inneren Brennpunkt des ersten Spiegels (102) gerichtet ist und an der ersten reflektierenden Oberfläche reflektiert wird und außerdem auf den inneren Brennpunkt des Innenspiegels (103A) gerichtet ist und an der zweiten reflektierenden Oberfläche reflektiert wird, und

das zweite Licht (R2) Licht ist, das auf den inneren Brennpunkt des Außenspiegels (103B) gerichtet ist und an der zweiten reflektierenden Oberfläche reflektiert wird.

3. Stereokamera nach Anspruch 1, wobei der erste Spiegel (102) und der zweite Spiegel (103) so angeordnet sind, dass der äußere Brennpunkt des ersten Spiegels (102) im Wesentlichen mit dem inneren Brennpunkt des Innenspiegels (103A) übereinstimmt.

4. Stereokamera nach Anspruch 3, wobei der Innenspiegel (103A) und der Außenspiegel (103B) so angeordnet sind, dass der äußere Brennpunkt des Innenspiegels (103A) im Wesentlichen mit dem äußeren Brennpunkt des Außenspiegels (103B) übereinstimmt.

5. Stereokamera nach Anspruch 1, die weiters Folgendes umfasst:
einen Spiegel, der angeordnet ist, um das erste Licht (R1) oder das zweite Licht (R2) zum optischen Bildgebungssystem (104) zu reflektieren.

6. Stereokamera nach Anspruch 1, wobei der Außenspiegel (103B) eine Stufe zum Außenumfang des Innenspiegels (103A) aufweist.

7. Lichteinheit mit einer integrierten Stereokamera, die Folgendes umfasst:

eine Stereokamera nach Anspruch 1; und
eine Lichtbestrahlungseinheit, die Licht aussendet, das von einer Lichtquelle ausgesendet wird.

8. Lichteinheit mit einer integrierten Stereokamera nach Anspruch 7, wobei die Stereokamera unter der Lichtbestrahlungseinheit angeordnet ist.

9. Lichteinheit mit einer integrierten Stereokamera nach Anspruch 7, wobei

das erste Licht (R1) Licht ist, das auf den inneren Brennpunkt des ersten Spiegels (102) gerichtet ist und an der ersten reflektierenden Oberfläche reflektiert wird und außerdem auf den inneren Brennpunkt des Innenspiegels (103A) gerichtet ist und an der zweiten reflektierenden Oberfläche reflektiert wird, und
das zweite Licht (R2) Licht ist, das auf den inneren Brennpunkt des Außenspiegels (103B) gerichtet ist und an der zweiten reflektierenden Oberfläche reflektiert wird.

10. Lichteinheit mit einer integrierten Stereokamera nach Anspruch 7, wobei der erste Spiegel (102) und der zweite Spiegel (103) so angeordnet sind, dass der äußere Brennpunkt des ersten Spiegels (102) im Wesentlichen mit dem inneren Brennpunkt des Innenspiegels (103A) übereinstimmt.

11. Lichteinheit mit einer integrierten Stereokamera nach Anspruch 10, wobei der Innenspiegel (103A) und der Außenspiegel (103B) so angeordnet sind, dass der äußere Brennpunkt des Innenspiegels (103A) im Wesentlichen mit dem äußeren Brennpunkt des Außenspiegels (103B) übereinstimmt.

**Revendications**

1. Caméra stéréo, comprenant :

un premier miroir (102) qui présente une première surface réfléchissante qui est une surface incurvée convexe dans une première direction, présente un premier sommet et présente une première forme d'éventail ;
un second miroir (103) qui présente une seconde surface réfléchissante convexe dans une seconde direction opposée à la première direction, présente un second sommet faisant face au premier sommet, et présente une seconde forme d'éventail ;
un système optique d'imagerie (104) qui forme une image d'une première lumière (R1) émise par un sujet, réfléchie sur la première surface réfléchissante, puis réfléchie sur la seconde surface réfléchissante, et d'une seconde lumière (R2) émise par le sujet et réfléchie sur la seconde surface réfléchissante ; et
un capteur d'image (105) qui reçoit la première lumière (R1) et la seconde lumière (R2) via le système optique d'imagerie (104),
dans laquelle

le second miroir (103) comprend un miroir intérieur (103A) et un miroir extérieur (103B) situé sur un côté périphérique extérieur du miroir intérieur (103A),

le premier miroir (102) est un miroir hyperboloïde,

le miroir intérieur (103A) est un miroir hyperboloïde,

le miroir extérieur (103B) est un miroir hyperboloïde, le miroir extérieur (103B) présente une constante conique différente d'une constante conique du miroir intérieur (103A),

le capteur d'image (105) est disposé dans une position où une position centrale du capteur d'image (105) est décalée d'un axe optique du système optique d'imagerie (104), et

le capteur d'image (105) et le système optique d'imagerie (104) sont disposés de telle sorte qu'une ligne centrale d'une image en forme d'éventail projetée sur une surface de réception de lumière (Pi) du capteur d'image (105) est non parallèle à un côté court de la surface de réception de lumière (Pi) du capteur d'image (105).

2. Caméra stéréo selon la revendication 1, dans laquelle

la première lumière (R1) est une lumière qui est dirigée vers un point focal intérieur du premier miroir (102) et est réfléchie sur la première surface réfléchissante, et en outre qui est dirigée vers un point focal intérieur du miroir intérieur (103A) et est réfléchie sur la seconde surface réfléchissante, et

la seconde lumière (R2) est une lumière qui est dirigée vers un point focal intérieur du miroir extérieur (103B) et qui est réfléchie sur la seconde surface réfléchissante.

3. Caméra stéréo selon la revendication 1, dans laquelle le premier miroir (102) et le second miroir (103) sont disposés de telle sorte qu'un point focal extérieur du premier miroir (102) coïncide sensiblement avec le point focal intérieur du miroir intérieur (103A).

4. Caméra stéréo selon la revendication 3, dans laquelle le miroir intérieur (103A) et le miroir extérieur (103B) sont disposés de telle sorte qu'un point focal extérieur du miroir intérieur (103A) coïncide sensiblement avec un point focal extérieur du miroir extérieur (103B).

5. Caméra stéréo selon la revendication 1, comprenant en outre :
un miroir disposé pour réfléchir la première lumière (R1) ou la seconde lumière (R2) vers le système optique d'imagerie (104).

6. Caméra stéréo selon la revendication 1, dans laquelle le miroir extérieur (103B) présente un gradin avec une périphérie extérieure du miroir intérieur (103A).

7. Unité d'éclairage avec caméra stéréo intégrée, comprenant :
une caméra stéréo selon la revendication 1 ; et une unité d'irradiation de lumière qui émet de la lumière émise par une source de lumière.

8. Unité de lumière avec caméra stéréo intégrée selon la revendication 7, dans laquelle la caméra stéréo est disposée en dessous de l'unité d'irradiation de lumière.

9. Unité d'éclairage avec caméra stéréo intégrée selon la revendication **7,** dans laquelle

la première lumière (R1) est une lumière qui est dirigée vers un point focal intérieur du premier miroir (102) et est réfléchie sur la première surface réfléchissante, et en outre qui est dirigée vers un point focal intérieur du miroir intérieur (103A) et est réfléchie sur la seconde surface réfléchissante, et

la seconde lumière (R2) est une lumière qui est dirigée vers un point focal intérieur du miroir extérieur (103B) et qui est réfléchie sur la seconde surface réfléchissante.

10. Unité d'éclairage avec caméra stéréo intégrée selon la revendication **7,** dans laquelle le premier miroir (102) et le second miroir (103) sont disposés de telle sorte qu'un point focal extérieur du premier miroir (102) coïncide sensiblement avec le point focal intérieur du miroir intérieur (103A).

11. Unité de lumière avec caméra stéréo intégrée selon la revendication 10, dans laquelle le miroir intérieur (103A) et le miroir extérieur (103B) sont agencés de telle sorte qu'un point focal extérieur du miroir intérieur (103A) coïncide sensiblement avec un point focal extérieur du miroir extérieur (103B).

# FIG. 1

# FIG. 2

# FIG. 3

## FIG. 4

## FIG. 5

FIG. 6

# FIG. 7

(a)

— ASPECT RATIO AP=0.75
— INTERNAL ANGLE=150°
--- AXIAL INCLINATION $\alpha$=30.8°

(b)

— ASPECT RATIO AP=0.56
— INTERNAL ANGLE=150°
--- AXIAL INCLINATION $\alpha$=17.2°

# FIG. 8

# FIG. 9

(a)

(b)

# FIG. 10

# FIG. 11

## EP 3 995 888 B1